Europäisches Patentamt

European Patent Office

Office européen des brevets

(19)

(11) EP 0 925 579 B1

(12) **EUROPÄISCHE PATENTSCHRIFT**

(45) Veröffentlichungstag und Bekanntmachung des Hinweises auf die Patenterteilung:
**28.11.2001 Patentblatt 2001/48**

(51) Int Cl.$^7$: **G10L 15/14**

(21) Anmeldenummer: **97944692.9**

(22) Anmeldetag: **10.09.1997**

(86) Internationale Anmeldenummer:
**PCT/DE97/02016**

(87) Internationale Veröffentlichungsnummer:
**WO 98/11534 (19.03.1998 Gazette 1998/11)**

(54) **VERFAHREN ZUR ANPASSUNG EINES HIDDEN-MARKOV-LAUTMODELLES IN EINEM SPRACHERKENNUNGSSYSTEM**

PROCESS FOR ADAPTATION OF A HIDDEN MARKOV SOUND MODEL IN A SPEECH RECOGNITION SYSTEM

PROCEDE D'ADAPTATION D'UN MODELE DE MARKOV CACHE DANS UN SYSTEME DE RECONNAISSANCE VOCALE

(84) Benannte Vertragsstaaten:
**AT DE DK ES FI FR GB IT NL**

(30) Priorität: **10.09.1996 DE 19636739**
**01.10.1996 DE 19640586**

(43) Veröffentlichungstag der Anmeldung:
**30.06.1999 Patentblatt 1999/26**

(73) Patentinhaber: **SIEMENS AKTIENGESELLSCHAFT**
**80333 München (DE)**

(72) Erfinder:
• **BUB, Udo**
**D-81247 München (DE)**
• **HÖGE, Harald**
**D-82131 Gauting (DE)**
• **KÖHLER, Joachim**
**D-80634 München (DE)**

(56) Entgegenhaltungen:
• **BUB U: "Task adaptation for dialogues via telephone lines" PROCEEDINGS ICSLP 96. FOURTH INTERNATIONAL CONFERENCE ON SPOKEN LANGUAGE PROCESSING (CAT. NO.96TH8206), PROCEEDING OF FOURTH INTERNATIONAL CONFERENCE ON SPOKEN LANGUAGE PROCESSING. ICSLP '96, PHILADELPHIA, PA, USA, 3-6 OCT. 1996, ISBN 0-7803-3555-4, 1996, NEW YORK, NY, USA, IEEE, USA, Seiten 825-828 vol.2, XP002053006**

• **BUB U ET AL: "In-service adaptation of multilingual hidden-Markov-models" 1997 IEEE INTERNATIONAL CONFERENCE ON ACOUSTICS, SPEECH, AND SIGNAL PROCESSING (CAT. NO.97CB36052), 1997 IEEE INTERNATIONAL CONFERENCE ON ACOUSTICS, SPEECH, AND SIGNAL PROCESSING, MUNICH, GERMANY, 21-24 APRIL 1997, ISBN 0-8186-7919-0, 1997, LOS ALAMITOS, CA, USA, IEEE COMPUT. SOC. PRESS, USA, Seiten 1451-1454 vol.2, XP002053007**

• **NECIOGLU B F ET AL: "A BAYESIAN APPROACH TO SPEAKER ADAPTATION FOR THE STOCHASTIC SEGMENT MODEL" SPEECH PROCESSING 1, SAN FRANCISCO, MAR. 23 - 26, 1992, Bd. 1, 23.März 1992, INSTITUTE OF ELECTRICAL AND ELECTRONICS ENGINEERS, Seiten 437-440, XP000341177**

• **PAUL D B ET AL: "THE LINCOLN LARGE-VOCABULARY STACK-DECODER HMM CSR" SPEECH PROCESSING, MINNEAPOLIS, APR. 27 - 30, 1993, Bd. 2 OF 5, 27.April 1993, INSTITUTE OF ELECTRICAL AND ELECTRONICS ENGINEERS, Seiten II-660-663, XP000427876**

• **ALTO P ET AL: "ADAPTING A LARGE VOCABULARY SPEECH RECOGNITION SYSTEM TO DIFFERENT TASKS" SIGNAL PROCESSING THEORIES AND APPLICATIONS, BARCELONA, SEPT. 18 - 21, 1990, Bd. 2, 18.September 1990, TORRES L;MASGRAU E; LAGUNAS M A, Seiten 1379-1382, XP000365815**

**(Forts. nächste Seite)**

- **HSIAO-WUEN HON ET AL: "VOCABULARY LEARNING AND ENVIRONMENT NORMALIZATION IN VOCABULARY-INDEPENDENT SPEECH RECOGNITION" SPEECH PROCESSING 1, SAN FRANCISCO, MAR. 23 - 26, 1992, Bd. 1, 23.März 1992, INSTITUTE OF ELECTRICAL AND ELECTRONICS ENGINEERS, Seiten 485-488, XP000341189**

- **HOFSTETTER E M ET AL: "TECHNIQUES FOR TASK INDEPENDENT WORD SPOTTING IN CONTINUOUS SPEECH MESSAGES*" SPEECH PROCESSING 2, AUDIO, NEURAL NETWORKS, UNDERWATER ACOUSTICS, SAN FRANCISCO, MAR. 23 - 26, 1992, Bd. 2, 23.März 1992, INSTITUTE OF ELECTRICAL AND ELECTRONICS ENGINEERS, Seiten 101-104, XP000356947**

**Beschreibung**

Die Erfindung bezieht sich auf ein Verfahren zur Anpassung von hidden-Markov-Lautmodellen an Betriebserfordernisse eines Spracherkennungssystems, insbesondere unter Verwendung speziell gebildeter Mehrsprachen hidden-Markov-Lautmodelle, die an eine Einsatzsprache angepaßt werden.

Ein Spracherkennungssystem greift im wesentlichen auf zwei unabhängige Wissensquellen zu. Zum einen ist dies ein phonetisches Lexikon, mit dem das zu erkennende Vokabular als Wortschatz festgelegt wird. Dort werden beispielsweise die ASCII-Strings der einzelnen zu erkennenden Worte, sowie deren phonetische Umschrift gespeichert. Ebenso wird durch dieses Lexikon eine sogenannte "Task" vorgegeben.

Zum anderen ist dies ein Codebuch, das die Parameter der Hidden-Markov-Lautmodelle (HMM) und damit insbesondere die Mittelpunkte der zu Erkennungssegmenten gehörigen Wahrscheinlichkeitsdichteverteilungen enthält.

Die beste Leistung eines Spracherkennungssystems ist zu beobachten, wenn das HMM-Codebuch optimal auf das Lexikon abgestimmt ist. Dies ist der Fall, wenn das HMM-Codebuch zusammen mit demjenigen Lexikon betrieben wird, mit dem dieses HMM-Codebuch auch eingangs durch Training erstellt wurde. Kann dies nicht gewährleistet werden, so ist ein Leistungseinbruch feststellbar.

Bei Spracherkennungssystemen, wie sie beispielsweise in Vermittlungssystemen eingesetzt werden, tritt häufig das Problem auf, daß der eingangs trainierte Wortschatz, mit welchem dieses System ausgeliefert wird im Betrieb durch den Kunden abgeändert wird. Dies hat in der Regel zur Folge, daß nun bei den neuen Wörtern des Lexikons Koartikulationen zwischen Phonemen auftreten, die vorher nicht trainiert werden konnten. Es besteht nun also ein "Mismatch" zwischen Lexikon und HMM-Codebuch, was zu einer verschlechterten Erkennungsleistung im praktischen Betrieb führt.

Ein praktisches Beispiel für eine solche Situation wäre ein telefonisches Vermittlungssystem einer Firma, das die Namen der Mitarbeiter versteht und den Verbindungswunsch eines Anrufers durch dessen Spracheingabe automatisch erkennt und den Anruf an die entsprechende Nebenstelle weiterleitet (Call-by-Name). Im Lexikon sind also die Namen der Mitarbeiter gespeichert. Durch Fluktuation werden sich die Namen immer wieder ändern und das System wird somit aus den genannten Gründen eine unbefriedigende Erkennungsleistung vorweisen.

Um eine möglichst hohe Erkennungsleistung eines Spracherkennungssystems unter den geschilderten Einsatzbedingungen zu gewährleisten, ist es also erforderlich, eine Anpassung (Adaption) des zugrundeliegenden HMM-Codebuchs dieses Erkennungssystems an die neu gegebene Task, die durch das veränderte Lexikon gegeben wurde, durchzuführen. Aus dem Stand der Technik sind unterschiedliche Verfahren zur Lösung dieses Problems bekannt. Aus [1] ist eine Lösung bekannt, bei der vorgeschlagen wird, ein Nachtraining zur Anpassung des Codebuchs an das Lexikon durchzuführen. Diese Vorgehensweise hat den Nachteil, daß im allgemeinen das Vokabular der Endanwendung zum Trainingszeitpunkt nur teilweise bekannt ist. Falls nun zu einem späteren Zeitpunkt das Nachtraining gestartet werden muß, so müssen alle potentiell benötigten akustischen Modelle eines neuen Vokabulars bereitgehalten werden, was unwirtschaftlich ist und praktisch schwer durchführbar wäre.

Aus [2] ist ein sogenannter MAP-Algorithmus (Maximum a Posteriori) zum Adaptieren der akustischen Modelle durch den Anwender auf Basis eines bestimmten Satzes von Sprachproben bekannt. Hierbei muß der Erwerber des Spracherkennungssystems Sprachproben von mehreren Sprechern zur Verfügung stellen.

Die Umadaption des Codebuches erfolgt dabei durch überwachtes Lernen, d. h. daß dem System die korrekte Transliteration einer Äußerung mitgeteilt werden muß. Die hierbei erforderlichen komplizierten Arbeitsschritte sind einem Kunden nicht zuzumuten.

Beide Lösungen aus dem Stand der Technik haben den gemeinsamen Nachteil, daß sie lediglich Off-Line ablaufen. Für eine HMM Codebuchadaption muß also das laufende System außer Betrieb genommen werden, damit die neuen Parameter, d. h. die entsprechenden Erkennungseinheiten in das System eingespielt werden können. Weiterhin erfordern die Vorgänge des Trainings und des Adaptierens eine große Zeit für die Einarbeitung und Durchführung, was einen finanziellen Nachteil für Erwerber des Systems bedeutet. Häufig wird deshalb bei Auslieferung des Produkts ein Ausgangscodebuch für die HMM bereitgestellt. Aus dem Stand der Technik bieten sich zwei Trainingsstrategien hierfür an.

Einerseits kann das Codebuch auf Basis eines phonetisch ausgeglichenen Trainingsdatensatzes generiert werden. Derartige Codebücher bieten den Vorteil, daß sie mit allen denkbaren Anwendungsfällen von unbekannten Aufgaben ("Tasks") fertig werden, da sie keine Erkennungseinheiten bevorzugen. Andererseits kann wenn möglich ein Spezialistencodebuch trainiert werden. Dabei wird das Spracherkennungssystem exakt auf denselben Wortschatz trainiert, welcher in der Endapplikation eine Rolle spielt. Hierdurch wird eine höhere Erkennungsrate für die Spezialanwendung hauptsächlich dadurch erzielt, daß das Spracherkennungssystem von Koartikulationen Gebrauch machen kann, welche es schon in der Trainingsphase trainiert bekam. Für Anwendungen bei denen sich das Lexikon ändert, zeigen solche Spezialistencodebücher aber schlechtere Leistungen.

Ist das Lexikon und damit der Wortschatz der Endanwendung, wie in dem für die Erfindung relevanten Fall, veränderbar, oder zum Trainingszeitpunkt gar gänzlich unbekannt, so sind Hersteller folglich häufig bestrebt, ein möglichst allgemein gehaltenes Codebuch in ihre Spracherkennungssysteme einzuarbeiten.

Ferner ist aus [11] bekannt, ein Spracherkennungssystem in Echtzeit an einen neuen Sprecher anzupassen. Da aber der Wortschatz in [11] beschränkt und festgelegt ist, ist aus [11] nicht entnehmbar, daß mit einem solchen Verfahren eine Wortschatzänderung durchführbar wäre.

Weiterhin besteht ein großes Problem darin, daß für jede Sprache in welcher die Spracherkennungstechnologie eingeführt werden soll, neue akustisch phonetische Modelle trainiert werden müssen, um eine Länderanpassung durchführen zu können. Meistens werden bei Spracherkennungssystemen HMM zur Modellierung der sprachspezifischen Laute verwendet. Aus diesen statistisch modellierten Lautmodellen werden im Anschluß akustische Wortmodelle zusammengefügt, welche während eines Suchprozesses beim Spracherkennungsvorgang erkannt werden. Zum Training dieser Lautmodelle werden sehr umfangreiche Sprachdatenbanken benötigt, deren Sammlung und Aufbereitung einen äußerst kosten- und zeitintensiven Prozeß darstellt. Hierdurch entstehen Nachteile bei der Portierung einer Spracherkennungstechnologie von einer Sprache in eine weitere Sprache, da die Erstellung einer neuen Sprachdatenbank einerseits eine Verteuerung des Produktes bedeutet und andererseits eine zeitliche Verzögerung bei der Markteinführung bedingt.

In gängigen erwerbbaren Spracherkennungssystemen werden ausschließlich sprachspezifische Modelle verwendet. Zur Portierung dieser Systeme in eine neue Sprache werden umfangreiche Sprachdatenbanken gesammelt und aufbereitet. Anschließend werden die Lautmodelle für die neue Sprache mit diesen gesammelten Sprachdaten von Grund auf neu trainiert.

Um den Aufwand und die Zeitverzögerung bei der Portierung von Spracherkennungssystemen in unterschiedliche Sprachen zu verringern, sollte also untersucht werden, ob einzelne Lautmodelle für die Verwendung in verschiedenen Sprachen geeignet sind. Hierzu gibt es in [4] bereits Ansätze mehrsprachige Lautmodelle zu erstellen und diese bei der Spracherkennung in den jeweiligen Sprachen einzusetzen. Dort werden auch die Begriffe Poly- und Monophoneme eingeführt. Wobei Polyphoneme Laute bedeuten, deren Lautbildungseigenschaften über mehrere Sprachen hinweg ähnlich genug sind, um gleichgesetzt zu werden. Mit Monophonemen werden Laute bezeichnet, welche sprachspezifische Eigenschaften aufweisen. Um für solche Entwicklungsarbeiten und Untersuchungen nicht jedesmal neue Sprachdatenbanken trainieren zu müssen, stehen solche schon als Standard zur Verfügung [8], [6], [9]. Aus [10] ist es bekannt vorhandene mehrsprachige Modelle zum Segmentieren der Sprachdaten in einer Zielsprache zu verwenden. Das Training der Lautmodellle wird dann in der Zielspache durchgeführt. Ein weiterer Stand der Technik zur mehrsprachigen Verwendung von Lautmodellen ist nicht bekannt.

Die der Erfindung zugrundeliegende Aufgabe besteht also darin, ein Verfahren zur Anpassung eines HMM in einem Spracherkennungssystem anzugeben, bei dem die Anpassung während des laufenden Betriebs des Spracherkennungssystems erfolgt. Insbesondere sollen durch die Anpassung die oben beschriebenen Komplikationen kompensiert werden, welche sich aus der Änderung des Lexikons und damit der Task ergeben.

Diese Aufgabe wird gemäß den Merkmalen des Patentanspruches 1 gelöst.

Eine weitere Aufgabe besteht demnach darin, ein Verfahren zur Bildung und Adaption spezieller mehrsprachenverwendbarer HMM in einem Spracherkennungssysten anzugeben, durch welches der Portierungsaufwand von Spracherkennungssystemen in eine andere Sprache minimiert wird, indem die Parameter in einem multilingualen Spracherkennungssytem reduziert werden.

Diese Aufgabe wird gemäß den Merkmalen des abhängigen Patentanspruches 8 gelöst.

Die Erfindung betrifft auch ein Spracherkennungssystem zur Ansführung der genannten verfahren.

Weiterbildungen der Erfindung ergeben sich aus den abhängigen Ansprüchen.

Der erfindungsgemäße Weg sieht es dazu vor, ein allgemein gehaltenes Codebuch, welches beispielsweise HMM enthält, die für mehrere Sprachen gemeinsam Verwendung finden, als Saatmodell zu verwenden und es im laufenden Betrieb bei einem veränderten Lexikon an dieses neue Lexikon anzupassen.

Besonders vorteilhaft wird durch das Verfahren eine Anpassung im Betrieb dadurch erreicht, daß ein bereits erkannter Merkmalsvektor einer Lautäußerung zu einer Verschiebung des gespeicherten Mittelpunktsvektors im HMM-Codebuch führt, indem mittels eines Anpassungsfaktors im Betrieb nach dem Erkennen des Wortes oder der Lautfolge, eine Verschiebung des Mittelpunktes der Wahrscheinlichkeitsverteilung der hidden-Markov-Modelle in Richtung des erkannten Merkmalsvektors erfolgt. Die Lernrate kann dabei durch den Anpassungsfaktor beliebig eingestellt werden.

Vorteilhaft kann beim Verfahren die Zuordnung der Merkmalsvektoren zu den HMM mit Standardverfahren, wie dem Viterbi-Algorithmus durchgeführt werden. Durch Anwendung des Viterbi-Algorithmus liegt nach Erkennung eine eindeutige Zuordnung der Merkmalsvektoren zu den gespeicherten Mittelpunktsvektoren des HMM Codebuchs vor.

Besonders vorteilhaft werden die anzupassenden und zu erkennenden Lautmodelle in einem standardisierten HMM-Codebuch zur Verfügung gehalten, welches als Grundlage für alle anzupassenden Praxismodelle dienen kann und somit für alle anzupassenden Systeme nur einmal bei der Erstellung trainiert, bzw. in Form eines Codebuches mit Mehrsprachen-HMM bereitgestellt werden muß.

Besonders vorteilhaft erfolgt die Anpassung des Schwerpunktvektors an den erkannten Merkmalsvektor bei Laplace- und Gauß- Wahrscheinlichkeitsdichteverteilungen der hidden-Markov-Modelle mit den speziell angegebenen Gleichungen, da damit ein vergleichsweise geringer Rechenaufwand verbunden ist.

Vorteilhaft wird beim aufgezeigten Verfahren eine noch höhere Erkennungsrate erzielt, wenn im Fall einer unsicher erkannten Lautäußerung diese komplett zurückgewiesen wird und keine Anpassung erfolgt.

Besonders vorteilhaft wird bei der Zurückweisung die Anzahl der Lauthypotesen nach der Viterbi-Suche und deren zugehörige Trefferraten der jeweiligen Hypothesen in bezug auf die Äußerung berücksichtigt. Die Zurückweisung wird in diesem Fall von den Unterschieden zwischen den Trefferraten abhängig gemacht, da diese Unterschiede eine Qualitätsangabe für die Güte der gefundenen Lösung darstellen. Bevorzugt kann bei großen Unterschieden keine Zurückweisung erfolgen und bei kleinen Unterschieden muß eine Zurückweisung erfolgen. Bevorzugt wird für diesen Fall eine Schranke der Unterschiede in den Trefferraten festgelegt, bei deren Unterschreiten eine Zurückweisung erfolgt, da mit der Überwachung einer Schranke lediglich ein geringer Rechenaufwand verbunden ist.

Ein Vorteil des aufgezeigten Verfahrens besteht darin, daß ein statistisches Ähnlichkeitsmaß eingesetzt wird, welches es erlaubt, aus einer gegebenen Anzahl von verschiedenen Lautmodellen für ähnliche Laute in unterschiedlichen Sprachen dasjenige Lautmodell auszuwählen, welches in seiner Charakteristik alle zur Verfügung stehenden Merkmalsvektoren der jeweiligen Laute am besten beschreibt.

Vorteilhaft wird als Maß für die Auswahl des besten HMM für unterschiedliche Lautmerkmalsvektoren der logarithmische Wahrscheinlichkeitsabstand zwischen den jeweiligen HMM und einem jeden Merkmalsvektor ermittelt. Hierdurch wird ein Maß zur Verfügung gestellt, welches experimentelle Befunde bezüglich der Ähnlichkeit von einzelnen Lautmodellen und deren Erkennungsraten widerspiegelt.

Vorteilhaft wird als Maß für die Beschreibung eines möglichst repräsentativen HMM der arithmetische Mittelwert der logarithmischen Wahrscheinlichkeitsabstände zwischen jedem HMM und den jeweiligen Merkmalsvektoren gebildet, da hierdurch ein symmetrischer Abstandswert erhalten wird.

Vorteilhaft wird das Beschreibungsmaß für die repräsentative Eigenschaft eines HMM zur Beschreibung von Lauten in unterschiedlichen Sprachen dadurch gebildet, daß die erfindungsgemäßen Gleichungen 5 bis 8 angewendet werden, da hierdurch ein geringer Rechenaufwand entsteht.

Vorteilhaft wird für die Anwendung eines Beschreibungsmaßes eine Schrankenbedingung vorgegeben, mit der eine Erkennungsrate des repräsentierenden HMM eingestellt werden kann.

Besonders vorteilhaft wird durch das Verfahren der Speicheraufwand für eine Sprachbibliothek reduziert, da ein Modell für mehrere Sprachen verwendet werden kann. Ebenfalls wird der Portierungsaufwand von einer Sprache in die andere minimiert, was einen reduzierten Zeitaufwand für die Portierung bedingt, der sich durch die On-Line-Adaption auch auf Null vermindern kann. Ebenso wird vorteilhaft ein geringerer Rechenaufwand bei der Viterbi-Suche ermöglicht, da beispielsweise bei mehrsprachigen Eingabesystemen weniger Modelle überprüft werden müssen.

Besonders vorteilhaft werden besondere HMM zur Verwendung in mehrsprachigen Spracherkennungssystemen eingesetzt. Durch diese Vorgehensweise können für Laute in mehreren Sprachen zu Polyphonem-Modellen zusammengefaßte HMM eingesetzt werden. Bei denen Überlappungsbereiche der verwendeten Standardwahrscheinlichkeitsdichteverteilungen bei den unterschiedlichen Modellen untersucht wurden. Zur Beschreibung des Polyphonem-Modelles kann eine beliebige Anzahl von identisch bei den unterschiedlichen Modellen verwendeten Standardwahrscheinlichkeitsdichteverteilungen herangezogen werden. Vorteilhaft können auch mehrere Standardverteilungen aus unterschiedlichen Sprachmodellen verwendet werden, ohne daß die hierdurch bewirkte Verwischung der einzelnen Sprachcharakteristika zu einer signifikant niedrigeren Erkennungsrate beim Einsatz dieses Modells führen würde. Als besonders vorteilhaft hat sich hier der Abstandsschwellenwert fünf zwischen ähnlichen Standardwahrscheinlichkeitsverteilungsdichten bewährt.

Besonders vorteilhaft werden beim Einsatz des Verfahrens mit drei Zuständen aus Anlaut, Mittellaut und Ablaut modellierte HMM verwendet, da hierdurch eine hinreichende Genauigkeit bei der Beschreibung der Laute erzielt wird und der Rechenaufwand bei der Erkennung und On-Line-Adaption in einem Spracherkenner gering bleibt.

Im folgenden werden Ausführungsbeispiele der Erfindung anhand von Figuren weiter erläutert.

Figur 1    zeigt ein Blockdiagramm eines Spracherkennungsverfahrens mit Codebuchadaption.
Figur 2    zeigt dabei den Aufbau eines einzigen Multilingualen Phonemes.

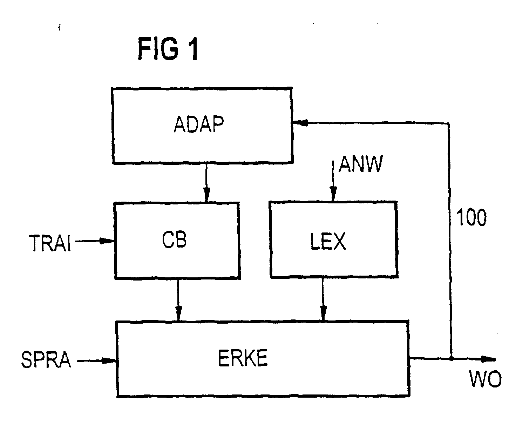

In Figur 1 wird in Form eines Blockdiagramms schematisch erläutert, welche einzelnen Bearbeitungsschritte das Verfahren, bzw. ein Spracherkennungssystem, das nach dem Verfahren arbeitet, erfordert.
In einer Erkennungsstufe ERKE des Spracherkennungssystems wird Sprache SPRA erkannt und als Wort WO ausgegeben. Es können auch Untereinheiten von Worten durch hidden-Markov-Modelle HMM modelliert worden sein und als Worte WO ausgegeben werden. In einem Lexikon LEX des Spracherkennungssystems sind beispielsweise als vom Hersteller vorgegebene Wortstrings ANW für die Anwendung in Form von ASCII-Zeichen abgelegt. In einem HMM-Codebuch CB sind zuvor trainierte und mit dem Lexikon LEX ausgelieferte Parameter für hidden-Markov-Lautmodelle abgelegt. Für eine mehrsprachige Anwendung des Spracherkennungssystems, kann das Lexikon auch HMM enthalten, die speziell für eine Mehrsprachenanwendung bereitgestellt, bzw. gebildet werden. Anhand des Lexikons LEX und des HMM-Codebuches CB führt der Spracherkenner ERKE die Erkennung von Worten aus Sprachsignalen SPRA durch. Zur Anpassung des Spracherkennungssystems an eine spezifische Anwendung, kann das Lexikon LEX beispielsweise vom Anwender durch anwendungsspezifische Wortstrings ANW abgeändert werden. Hierzu können gegebenenfalls auch Wortstrings in einer Fremdsprache eingegeben werden. Fremdsprache bedeutet in diesem Zusammenhang, daß die Sprache bei der Bereitstellung des Codebuches nicht berücksichtigt wurde. Gemäß dem Verfahren wird nach Erkennung eines speziellen Wortes oder einer Erkennungseinheit WO, einem Adaptionsbaustein ADAP über eine Verbindungsleitung 100 mitgeteilt, welches dieser Worte erkannt wurde und welche Segmente damit verbunden sind. Anschließend erfolgt bevorzugt: eine Anpassung, der mit dem erkannten Wort verbundenen Parameter der hidden-Markov-Modelle an den Merkmalsvektor, welcher aus dem Sprachsignal abgeleitet wurde. Im Adaptionsbaustein ADAP kann beispielsweise eine bevorzugt auszuführende Adaptionsstrategie zur Anpassung der hidden-Markov-Modelle festgelegt sein. In einer Anpassungsvariante können beispielsweise Worte mit unsicheren Trefferraten für die einzelnen Hypothesen nach der Viterbi-Suche, ausgelassen werden. Da erfindungsgemäß neue Koartikulationen gelernt werden sollen, können bevorzugt lediglich nur solche Merkmalsvektoren zu Anpassung ausgewählt werden, welche speziell den neu zu lernenden Koartikulationssegmenten zugeordnet werden. Fallweise kann es jedoch günstiger sein alle zur Verfügung stehenden Merkmalsvektoren zur Anpassung auszuwählen, um sicherzustellen, daß auch solche Koartikulationen von der Anpassung erfaßt werden, welche über ein Diphon hinaus reichen.

Der Schwerpunktsvektor der zugrundeliegenden hidden-Markov-Modelle wird an den Merkmalsvektor angepaßt, indem beispielsweise Komponentenweise eine Mittelwertbildung durchgeführt wird und diese Mittelwertbildung zu einer Verschiebung des im Codebuch CB gespeicherten Merkmalsvektors führt. Hierzu werden die jeweiligen Mittelwerte mit einem Anpassungsfaktor, der hier als Lernschrittweite fungiert, multipliziert, so daß ein neuer Schwerpunktsvektor des im Lexikon gespeicherten hidden-Markov-Modelles bzw. der gespeicherten hidden-Markov-Modelle entsteht. Dieser adaptierte Schwerpunktsvektor fungiert in Zukunft als Ausgangsgröße bei der Erkennung von Sprachsignalen im Spracherkenner ERKE.

Die Grundidee besteht dabei darin, daß das System während der Anwendung beim Auftreten eines veränderten und vom Anwender vorgegebenen Lexikons automatisch nachtrainiert bzw. nachadaptiert wird. Beispielsweise wird eine solche Veränderung festgestellt, indem ins Lexikon LEX eingegebene Wortstrings ANW mit dem Lexikoninhalt verglichen werden. Auf diese Weise können auch Wortstrings in einer Fremdsprache einfach identifiziert werden, um ggf. spezielle Mehrsprachen-HMM heranzuziehen. Vorzugsweise erfolgt gleichzeitig mit der Eingabe des Wortstrings in das Lexikon eine erste Eingabe des Wortes als Sprache SPRA, um eine erste Zuordnung zwischen den im Codebuch CB vorhandenen HMM und dem neu zu erkennenden Wort herzustellen. Dieses adaptive Nachtuning der Erkennungsparameter erfolgt gemäß der Erfindung anhand von Sprachdaten, welche während der Bedienung des Systems anfallen. Bevorzugt wird die Adaption dabei bei jeder Änderung nachgeführt, ohne daß während der Entwicklungsphase des Spracherkennungssystems das jeweilige Vokabular für die Erstellung des Lexikons LEX bekannt sein muß. Gegenüber dem Stand der Technik weist das erfindungsgemäße Verfahren den Vorteil auf, daß es On-Line abläuft, ohne das ein Satz spezieller Sprachproben für das Training benötigt wird. Hierdurch ergibt sich ebenfalls die Möglichkeit Mehrsprachen-HMM On-Line an eine Fremdsprache anzupassen. Gemäß dem Adaptionsverfahren erfolgt die Anpassung dabei bevorzugt unüberwacht im Hintergrund des Systems, wozu es seine eigenen Ergebnisse zur Adaption während der Anwendung verwendet. Die dabei benötigten Rechenschritte sind relativ einfach zu implementieren und erfordern eine geringe Rechenleistung.

Der grundlegende Gedanke besteht dabei darin, daß die Spracherkennung auf HMM basiert. Beim Training solcher Modelle werden insbesondere die Parameter zur Berechnung der Emissionswahrscheinlichkeiten bestimmt. Die zur Berechnung benötigten Wahrscheinlichkeitsdichten werden durch Standardverteilungen, wie z. B. Gauß-, oder Laplace-Verteilungen angenähert. Wichtigster Parameter für diese Approximation ist dabei der Mittelpunktsvektor, bzw. der Schwerpunktsvektor der jeweiligen Verteilungen. Diese Parameter sind im Codebuch gespeichert. Während der Spracherkennung liegt bei der Erkennung mit dem sogenannten Viterbi-Algorithmus nach der Klassifizierung, eine Zuweisung einzelner Spracheinheiten, welche durch Merkmalsvektoren repräsentiert werden, zu bestimmten Erkennungssegmenten und den entsprechenden Wahrscheinlichkeitsdichteverteilungen vor. Nach dem aufgezeigten Verfahren erfolgt der eigentliche Adaptionsschritt bevorzugt durch eine Neuberechnung der Mittelpunkte der betroffenen Wahrscheinlichkeitsdichteverteilungen unter Benutzung der in der Anwendung angefallenen Merkmalsvektoren. Besonders vorteilhaft wird dabei die Adaption nach jeder abgeschlossenen Äußerung ausgeführt, sobald der Viterbi-Pfad mit der eindeutigen Zuordnung von Merkmalsvektor zu Wahrscheinlichkeitsdichteverteilung vorliegt.

Ein Problem welches der Erfindung löst besteht dabei darin, daß das Training eines großen wortschatzunabhängigen hidden-Markov-Modelles, welches mit allen Erfordernissen aus allen denkbaren praktischen Anwendungen fertig wird, nicht möglich ist [1]. An praktische Anwendungen sind dabei besonders strenge Anforderungen zu stellen. Adaptionsverfahren zur Spracherkennung sollter. dabei

- wenig rechenaufwendig und einfach zu implementieren

- unüberwacht
- sprecherunabhängig
- On-Line arbeiten und im voraus kein vorheriges Adaptionsset erfordern. Besonders soll für die Anwendung in dem erfindungsgemäßen Verfahren ein HMM-Codebuch als Saatmodell eingesetzt werden, welches wortschatzunabhängig trainiert wurde, so daß es keine Merkmale und Bevorzugungen von irgendwelchen speziellen Erkennungseinheiten aufweist. Beispielsweise können die zugrundeliegenden HMM als monophone Modelle trainiert sein, jedoch können auch hidden-Markov-Modelle mit verbundenen Diphonen eingesetzt werden. Bei der Erprobung des erfindungsgemäßen Verfahrens wurden als Saatmodell hidden-Markov-Modelle verwendet, welche monophon trainiert wurden. Die Strategie bei der Anpassung des Codebuches nach dem Verfahren besteht dabei beispielsweise darin, sein allgemeines monophones Saatmodell, beispielsweise auch für Mehrsprachen HMM, als Ausgangsbasis zu verwenden und sein phonemisches Inventar zur Erstellung eines arbeitsfähigen Diphon-Modelles zu verwenden, wann immer das Lexikon verändert wird und ein neues kontextabhängiges Segment für geänderte Betriebserfordernisse erstellt werden muß. Dabei wird das jeweilige Modell bevorzugt während des Erkennungsprozesses On-Line adaptiert. Hierzu werden bevorzugt folgende Schritte ausgeführt:

- Zunächst wird das Lexikon LEX untersucht um herauszufinden, welche kontextabhängigen Segmente benötigt werden.
- Falls ein auftauchendes Segment bis dahin unbekannt war werden die korrespondierenden kontextunabhängigen Segmentverteilungen vom allgemeinen Modell in das neue Modell des Arbeitswörterbuches kopiert.
- Erkennung von eingehenden Sprachäußerungen.
- Fallweise Zurückweisung von unsicheren Erkennungsergebnissen wenn das gewünscht wird.
- On-Line-Training des Arbeitscodebuches mit der beschriebenen Anpassungsformel auf Basis der eingehenden Sprachdaten.

Zur Adaption der Modelle, wird der Schwerpunktsvektor der erkannten hidden-Markov-Modelle an den Merkmalsvektor des eingehenden Sprachsignales angepaßt. Dabei wird bevorzugt gemäß einer Lernrate eine Verschiebung des im Lexikon gespeicherten Schwerpunktsvektors in Richtung des erkannten Merkmalsvektors der entsprechenden Lautäußerungen durchgeführt. Dabei wird davon ausgegangen, daß die relevanten Unterschiede zwischen den aufgabenspezifischen Versionen des Lexikons hauptsächlich die Parameter der Wahrscheinlichkeitsdichteverteilung der hidden-Markov-Modelle angehen, wobei insbesondere der Ort der Mittelwerte im akustischen Raum betroffen ist.

Von einer Merkmalsextraktionsstufe eines Spracherkennungssystems wird dabei eine eingehende Äußerung bevorzugt in eine Serie von Merkmalsvektoren transformiert:

$$X=\{\bar{x}_1,\bar{x}_2,...,\bar{x}_T\} \tag{1}$$

Unter Verwendung des Viterbi-Algorithmus wird dann beispielsweise jeder einzelne Merkmalsvektor $\bar{x}_1$, mit t = 1, 2, ... T einem Zustand $\Theta^i_t$ des besten hidden-Markov-Modelles i nach der Erkennung zugewiesen. Für den Fall, daß multimodale Laplace-Verteilungen für die Modellierungen der hidden-Markov-Modelle und der Zustands-Emissionswahrscheinlichkeiten verwendet werden, läßt sich die korrespondierende Wahrscheinlichkeitsdichteverteilung des S-ten Zustandes eines hidden-Markov-Modelles wie folgt approximieren

$$b^i_s(\vec{x}) = \sum_{m=1}^{M^i_s} c^i_{s,m} e^{-\frac{\sqrt{2}}{\sigma}\|\vec{x}-\vec{\mu}^i_{s,m,t}\|} \tag{2}$$

Dabei sind $M^i_s$, $c^i_{s,m}$ und $\sigma$ Konstanten, welche bevorzugt während des Trainings bestimmt werden. Bei einer gegebenen Zuordnung eines erkannten Merkmalsvektors und eines Zustandes wird dann bevorzugt der Mittelwert $\vec{\mu}^i_{s,m,t}$ bestimmt, welcher am nächsten am Merkmalsvektor $\vec{x}_t$ liegt, wobei der City-Blockabstand (2*) als Maß benutzt wird und n die Komponente eines Vektors bezeichnet.

$$\|\vec{x}-\vec{\mu}\| = \sum_n |x_n - \mu_n| \tag{2*}$$

Der am Nächsten liegende mittlere Abstand wird dabei gemäß

$$\vec{\mu}^{i}_{s,m,t+1} = (1-\alpha)\,\vec{\mu}^{i}_{s,m,t} + \alpha\vec{x}_{t} \tag{3}$$

aktualisiert. Gleichung 3 kann man sich geometrisch wie folgt interpretiert vorstellen. Der aktualisierte Schwerpunktsvektor $\vec{\mu}^{i}_{s,m,t+1}$ liegt auf einer Geraden, welche durch den alten Mittelpunktsvektor $\vec{\mu}^{i}_{s,m,t}$ und den aktuellen Merkmalsvektor $\vec{x}_{t}$ geht. Der Parameter $\alpha$ wird dabei als Adaptionsfaktor oder als Lernrate verwendet. Für den speziellen Fall, daß a = 0 ist, wird keine Adaption durchgeführt, während für $\alpha$ = 1 der aktuelle Schwerpunktsvektor dem aktuellen Merkmalsvektor entspricht.

In allen Anwendungen von Dialogsystemen können ebenfalls Erkennungsfehler auftreten. Die Ursachen bestehen dabei beispielsweise in einem falschen Eingabewort durch den Benutzer oder einfach in einer falschen Klassifizierung durch die Erkennungseinheit. Für den Fall daß ein solcher Fehler auftritt, sollte beispielsweise ein Dialogmanager den Benutzer zu einer erneuten Eingabe auffordern. Vereinfacht kann aber auch lediglich eine besonders gute Äußerung ausgewählt werden. Hierzu wird beispielsweise eine relativ einfache statistische Zurückweisungsstrategie verwendet. Die Trefferrate $S_0$ der besten und die Trefferrate $S_1$ der zweitbesten Lauthypothese nach der n-Bestensuche im Viterbi-Algorithmus wird dabei untersucht.

$$\text{rejectionflag} = \begin{cases} 1 & \text{if} \quad (s_1 - s_0) \le r_{\text{thresh}} \\ 0 & \text{else} \end{cases} \tag{4}$$

Falls die Zurückweisungsmarke rejectionflag 1 beträgt, so wird die korrespondierende Äußerung bevorzugt durch den Adaptionsalgorithmus unterdrückt. Bevorzugt wird die Schranke für die Zurückweisung dadurch bestimmt, daß empirisch $S_{\text{mean}}$ d. h. der Mittelwert aller Trefferraten pro Wort von eingehenden Äußerungen ermittelt wird. Bevorzugt ergibt sich aus Experimenten der Grenzwert $R_{\text{thresh}}$ = 0,005 $S_{\text{mean}}$. Mit diesem Grenzwert wird eine Zurückweisungsrate von falschen Äußerungen von 61,2 % erreicht und die Adaption kann dabei mit sicherer klassifizierten Daten durchgeführt werden, als dies der Fall wäre, wenn keine Zurückweisung durchgeführt würde. Bei experimentellen Überprüfung des Verfahrens wurde von 2000 Test-Äußerungen eines geänderten Vokabulars für die Adaption ausgegangen. Bezüglich des Adaptionsfaktors $\alpha$ und seiner Dimensicnierung wurde dabei festgestellt, daß bereits kleine Werte von $\alpha$, d. h. 0,025 die Fehlerrate bei der Erkennung signifikant verringern. Ein breites Optimum von $\alpha$ wurde dabei zwischen 0,05 und 0,01 festgestellt. Dabei wurde bei einem Optimum von 0,075 eine Verbesserung der Fehlerrate von 34,5 % bei der Erkennung von Worten erzielt. Das bedeutet, daß sich durch das erfindungsgemäße Verfahren Erkennungseinheiten mit dem angepaßten Codebuch CB um 34,5 % besser erkennen lassen, als dies ohne seine Anwendung der Fall wäre.

Für den Fall daß eine Zurückweisung wie beschrieben durchgeführt wird, ergibt sich ein verbesserter Wert des Anpassungsfaktors $\alpha$ zu 0,125. Dieser verbesserte Wert von $\alpha$ führt zu einer Reduktion der Fehlerrate von 40,1 % bei dem experimentell verwendeten Wortschatz. Der höhere Faktor von $\alpha$ läßt sich dadurch erklären, daß durch die Zurückweisung von falschen Daten ein besserer Merkmalsvektor für die Anpassung des HMM-Codebuches vorliegt und daß damit eine höhere Lernschrittweite gewählt werden kann. Die experimentellen Befunde haben auch gezeigt, daß mit dem adaptiven Verfahren nahezu dieselbe Erkennungsrate erreicht wird, wie dies für ein spezielles Modell für den entsprechenden Anwendungsfall erzielt würde. Die Erkennungsrate lag dabei nur 0,7 % unter der des Speziallexikons.

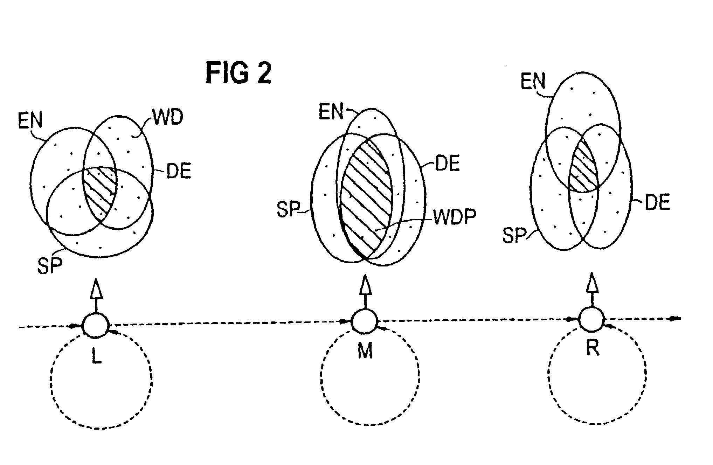

Figur 2 zeigt den Aufbau eines einzigen Multilingualen Phonemes. In diesem Fall ist es das Phonem M das dargestellt wird. Die Zahl der Wahrscheinlichkeitsdichten und die Erkennungsrate für dieses Phonem sind in Tabelle 1 angegeben:

| Thr. | #densit(a,b,c). | Engl.[%] | Germ.[%] | Span.[%] |
|------|-----------------|----------|----------|----------|
| 0 | 341(0 0 341) | 46.7 | 44.7 | 59.4 |
| 2 | 334(0 14 327) | 45.0 | 46.4 | 57.5 |
| 3 | 303(27 34 280) | 48.0 | 45.8 | 57.5 |
| 4 | 227(106 57 187) | 50.9 | 44.1 | 58.7 |

(fortgesetzt)

| Thr. | #densit(a,b,c). | Engl.[%] | Germ.[%] | Span.[%] |
|------|-----------------|----------|----------|----------|
| 5 | 116(221, 48,72) | 49.3 | 43.1 | 57.0 |
| 6 | 61(285, 22, 34) | 41.2 | 38.6 | 50.4 |

In Figur 2 ist der Anlaut L, der Mittellaut M und der Ablaut R des Phonem-Modelles dargestellt. Für die unterschiedlichen Sprachen Englisch EN, Deutsch DE und Spanisch SP sind die Schwerpunkte der Wabrscheinlichkeitdichteverteilungen der einzelnen verwendeten Standardwahrscheinlichdichten eingetragen und als WD gekennzeichnet. Hier ist beispielsweise ein HMM aus drei Teilzuständen dargestellt. Die Erfindung soll jedoch nicht lediglich auf Anwendung solcher HMM beschränkt werden, obwohl diese unter Berücksichtigung des Kriteriums, das ein minimaler Rechenaufwand der Erkennung durchgeführt werden soll ein gewisses Optimum darstellen. Die Erfindung kann ebenso auf HMM angewendet werden, die eine andere Anzahl von Zuständen aufweisen. Durch die Erfindung soll insbesondere erreicht werden, daß der Portierungsaufwand bei der Portierung von Spracherkennungssystemen in eine andere Sprache reduziert, bzw. vermieden wird und daß die verwendeten Rechenresourcen durch Reduktion der zugrundeliegenden Parameter möglichst gering gehalten werden. Beispielsweise können durch derartige Spracherkennungssysteme begrenzte Hardwareerfordernisse besser erfüllt werden, insbesondere wenn ein- und dasselbe Spracherkennungssystem für Mehrsprachenanwendung in einem Gerät zur Verfügung gestellt werden soll.

Zunächst sollte um das Ziel zu erreichen, die Ähnlichkeiten von Lauten in unterschiedlichen Sprachen auszuschöpfen und beim Modellieren zu berücksichtigen, beachtet werden, daß sich die Phoneme in verschiedenen Sprachen unterscheiden können. Die Gründe hierfür bestehen vor allen Dingen in:

- Unterschiedlichen phonetischen Kontexten, wegen der unterschiedlichen Phonemsätze in den verschiedenen Sprachen;
- unterschiedlichen Sprechweisen;
- verschiedenen prosodischen Merkmalen;
- unterschiedlichen allophonischen Variationen.

Ein besonders wichtiger Aspekt, welcher dabei zu berücksichtigen ist, besteht im Prinzip der genügenden wahrnehmungstechnischen Unterscheidbarkeit der Phoneme [7]. Dies bedeutet, daß einzelne Laute in verschiedenen Sprachen akustisch unterscheidbar gehalten werden, so daß es für den einzelnen Zuhörer leichter ist sie voneinander zu separieren. Da aber jede einzelne Sprache einen unterschiedlichen Phonemschatz hat, werden die Grenzen zwischen zwei ähnlichen Phonemen in jeder einzelnen Sprache sprachspezifisch festgelegt. Aus diesen Gründen hat die Ausprägung eines bestimmten Lautes eine sprachspezifische Komponente.

Bevorzugt werden die zugrundeliegenden Phoneme mittels kontinuierlichen dichten hidden-Markov-Modellen (CD-HMM) modelliert [5]. Als Dichtefunktionen werden häufig Laplace-Mischungen benutzt. Dabei besteht jedes einzelne Phonem aus drei Zuständen von links nach rechts gerichteten HMM. Die akustischen Merkmalsvektoren bestehen dabei beispielsweise aus 24 mel-skalierten cepstral, 12 delta cepstral, 12 delta delta cepstral, Energie, delta-Energie und delta delta-Energie-Koeffizienten. Beispielsweise wird als Länge des Untersuchungszeitfensters 25 ms gewählt, wobei die Rahmenabstände 10 ms zwischen den einzelnen Rahmen betragen. Aus Gründen der begrenzten Größe des Sprachkorpus werden bevorzugt lediglich kontextunabhängige generierte Phoneme angewandt. Als besonders repräsentatives Phoneminventar wird jenes aus [6] gewählt.

Die Idee des Verfahrens besteht darin, daß zum einen ein zur Verfügung gestelltes Ähnlichkeitsmaß verwendet wird, um aus standardmäßig verfügbaren Sprachphonembibliotheken für unterschiedliche Sprachen jenes HMM auswählen zu können, welches den Merkmalsvektoren, die aus den unterschiedlichen Lautmodellen der unterschiedlichen Sprachen abgeleitet werden, am nächsten kommt. Hierdurch ist es möglich, die Ähnlichkeiten zweier Phonem-Modelle zu ermitteln und über dieses Ähnlichkeitenmaß basierend auf der Differenz der Log-Likelihood-Werte zwischen den Lautrealisierungen und Lautmodellen eine Aussage zu treffen, ob es sich lohnt, einen Laut für mehrere Sprachen gemeinsam zu modellieren, bzw. ein betreffendes schon bestehendes HMM für die Modellierung des Lautes in mehreren Sprachen zu verwenden. Hierdurch wird die Zahl der Parameter, welche bei der Spracherkennung und Adaption der Modelle zu berücksichtigen sind reduziert, indem die Zahl der zu untersuchenden HMM reduziert wird.

Ein weiterer Lösungsansatz besteht darin, ein spezielles zur Modellierung eines Lautes in mehreren Sprachen zu erstelltes Polyphonem-Modell zu verwenden. Zu dessen Erzeugung werden zunächst beispielsweise drei Lautsegmente, in Form eines Anlautes, Mittellautes und Ablautes gebildet, deren Zustände aus mehreren Wahrscheinlichkeitdichtefunktionen den sogenannten Mischverteilungsdichten mit den dazugehörigen Dichten bestehen. Diese Dichten der über verschiedenen Sprachen ähnlichen Lautsegmente werden dann zu einem multilingualen Codebuch zusammengefaßt. Somit teilen sich Lautsegmente verschiedener Sprachen die gleichen Dichten. Während das Codebuch für mehrere Sprachen gleichzeitig benutzt werden kann, werden beispielsweise die Gewichte, mit denen die Dichten gewichtet werden für jede Sprache getrennt ermittelt und bereitgestellt.

Zur Bildung eines geeigneten Ähnlichkeitsmaßes werden dabei bevorzugt HMM mit drei Zuständen herangezogen. Das Abstands- oder Ähnlichkeitsmaß kann dabei benutzt werden um mehrere Phonem-Modelle zu einem multilingualen Phonem-Modell zusammenzufassen oder diese auf geeignete Weise zu ersetzen. Hierdurch kann ein multilingualer Phonemschatz bereitgestellt werden. Bevorzugt wird zur Messung des Abstandes bzw. zur Bestimmung der Ähnlichkeit von zwei Phonem-Modellen des selben Lautes aus unterschiedlichen Sprachen eine Meßgröße verwendet, welche auf der relativen Entropie basiert [3]. Während des Trainings werden dabei die Parameter der gemischten Laplacedichteverteilungen der Phonem-Modelle bestimmt. Weiterhin wird für jedes Phonem ein Satz von Phonemtokens X *als* Merkmalsvektor aus einem Test- oder Entwicklungssprachkorpus extrahiert. Diese Phoneme können dabei durch ihr international genormtes phonetisches Etikett markiert sein. Demnach werden zwei Phonem-Modelle $\lambda_i$ and $\lambda_j$ und ihre zugehörigen Phonemtoken $X_i$ und $X_j$ zur Bestimmung des Ähnlichkeitsmaßes zwischen diesen unterschiedlichen Phonemen wie folgt behandelt.

$$d(\lambda_i, \lambda_j) = \log p(X_i|\lambda_i) - \log p(X_i|\lambda_j) \tag{5}$$

Dieses Abstandsmaß kann als Log-Likelihood-Abstand angesehen werden, welcher darstellt: wie gut zwei verschiedene Modelle zu dem selben Merkmalsvektor $X_i$ passen. Demgemäß wird der Abstand zwischen den beiden Modellen $\lambda_i$ und $\lambda_j$ gemäß:

$$d(\lambda_j, \lambda_i) = \log p(X_j|\lambda_j) - \log p(X_j|\lambda_i) \tag{6}$$

bestimmt. Um einen symmetrischen Abstand zwischen diesen beiden Phonem-Modellen zu erhalten, wird dieser bevorzugt gemäß

$$d(\lambda_j; \lambda_i) = \frac{1}{2}(d(\lambda_i, \lambda_j) + d(\lambda_j; \lambda_i)) \tag{7}$$

bestimmt. Anhand von experimentellen Befunden konnte festgestellt werden, daß sich durchaus einige Phonem-Modelle aus anderen Sprachen besser für die Verwendung in einem deutschen Spracherkennungssystem eignen, als ein deutsches Phonem-Modell. Beispielsweise gilt dies für die Phoneme k, p und N. Für diese Phoneme eignet sich das englische Phonem-Modell besser als das deutsche. Während beispielsweise ein großer Unterschied zwischen dem deutschen und dem englischen Modell über den Umlaut aU beobachtet wurde, was bedeutet, daß für beide Laute ein unterschiedliches Symbol im multilingualen Phonemschatz eingeführt werden sollte. Andererseits konnte für den Umlaut aI im deutschen und im englischen eine große Ähnlichkeit festgestellt werden, das bedeutet, daß lediglich ein Phonem-Modell für beide Sprachen gleich gut Verwendung finden kann. Ausgehend davon sollte für jedes Symbol eines multilingualen Phonemschatzes ein separates statistisches Modell erzeugt werden. In [8] wurden Polyphoneme als solche Phoneme bezeichnet, die ähnlich genug sind, um in verschiedenen Sprachen als ein einziges Phonem modelliert zu werden. Ein Nachteil dieser Vorgehensweise besteht darin, daß für die sprachspezifische Erkennung der vollständige akustische Raum des Polyphonems verwendet wird. Ziel ist es jedoch, die sprachabhängigen und die sprachspezifischen akustischen Eigenschaften eines multilingualen Modells zu kombinieren. Gemäß der Erfindung sollen in einem Polyphonem-Modell solche Bereiche des akustischen Raumes eingegrenzt sein , in denen sich die verwendeten Wahrscheinlichkeitdichten der einzelnen Phoneme überlappen. Dazu wird z.B. eine gruppierende Verdichtungstechnik (agglommerative density clustering technique) eingesetzt, um gleiche oder ähnliche Ausprägungen eines Phonems zu reduzieren. Besonders wichtig ist es dabei zu beachten, daß lediglich die Dichten der korrespondierenden Zustände der einzelnen HMM in den Phonemen zusammengefaßt werden dürfen.

In Figur 2 ist dabei zu erkennen, daß die jeweiligen Dichten für die einzelnen Zustände L, M und R in den eingegrenzten Regionen enthalten sind. Während identische Dichten über die einzelnen Sprachen EN, DE, und SP verteilt sind, variieren die Mischungsgewichte sprachabhängig. Zu berücksichtigen ist jedoch, daß spezifische Ausprägungen eines Phonems in verschiedenen Sprachen in unterschiedlicher Häufigkeit auftreten.

Die Zusammenfassung der unterschiedlichen Wahrscheinlichkeitsdichten kann dabei mit einem unterschiedlichen Abstandsschwellenwert für die Wahrscheinlichkeitsdichten bei der Dichtehäufung (density clustering) durchgeführt werden. Beispielsweise reduziert sich mit einem Abstandsschwellenwert von fünf die Zahl der verwendeten Dichten um einen Faktor 3 gegenüber dem Ausgangszustand, ohne daß damit eine entscheidende Verschlechterung bei der Spracherkennungsrate einhergeht. In diesem Beispiel wurden 221, 48 und 72 von den ursprünglichen 341 Ausgangsdichten für jeweils die PolyphonemRegion, die Zweisprachen-Region und die Einsprachen-Region zusammengefaßt. In Figur 2 ist eine solche Polyphonemregion als Schnittmenge der Kreise für die einzelnen Sprachen dargestellt. Beim Mittellaut M des dargestellten HMM ist eine Wahrscheinlichkeitsdichte in einer solchen Region als WDP bezeichnet. Die Erkennungsraten für ein komplettes multilinguales Spracherkennungssystem sind dabei in Spalte 4 und 5 der Tabelle 2 als ML1 und ML2 angegeben:

| Language | #Tokens | LDP[%] | ML1[%] | ML2[%] |
|----------|---------|--------|--------|--------|
| English | 21191 | 39.0 | 37.3 | 37.0 |
| German | 9430 | 40.0 | 34.7 | 37.7 |
| Spanish | 9525 | 53.9 | 46.0 | 51.6 |
| Total | 40146 | 42.8 | 38.8 | 40.8 |

Während bei der ersten Untersuchung ML1 die konventionelle Polyphonem-Definition aus [8] verwendet wurde, was bedeutet, daß der komplette akustische Bereich des Polyphonem-Modells bestehend aus der äußeren Kontur der Sprachbereiche in Figur 2, für die Erkennung verwendet wurde, benutzt die beschriebene Methode lediglich einen Teilbereich daraus. Durch Verwendung der teilweisen Überlappung der einzelnen Sprachbereiche für die Modellierung des Polyphonem-Modells, ist beispielsweise eine Verbesserung von 2 % erzielbar, wie dies in Tabelle 2 in der Spalte für ML2 dargestellt ist.

Durch die Kombination multilingualer Lautmodelle mit dem automatischen On-Line- Adaptionsverfahren, läßt sich die Erkennungsgenauigkeit der Modelle verbessern. Durch eine unüberwacht Adaption werden sie an das neue Anwendungsvokabular, bzw. die neue Sprache angepaßt. Hierzu müssen vorteilhaft keine zusätzlichen Daten für die neue Sprache gesammelt werden. Falls universelle Lautmodelle eingesetzt werden, kann das Verfahren für beliebige Sprachen verwendet werden. Beispielsweise kann mit multilingualen Lautmodellen aus Daten der Sprachen Deutsch, Amerikanisch und Spanisch durch On-Line-Adaption ein Einzelworterkennungssystem für slowenische Ziffern optimiert werden. Hierzu wird dem Erkenner beim Erkennungsvorgang lediglich slowenisches Datenmaterial zugeführt.

Literatur:

[1] Hon H.W., Lee K.F., "On Vocabulary-Independent Speech Modeling", Proc. IEEE Intern. Conf. on Acoustics, Speech, and Signal Processing, Albuquerque NM, 1990;

[2] Lee C.H., Gauvain J.L., "Speaker Adaptation Based on MAP Estimation of HMM Parameters", Proc. IEEE Intern. Conf. on Acoustics, Speech, and Signal Processing, Minneapolis MN, 1993;

[3] V. Digalakis A. Sankar, F. Beaufays.: "Training Data Clustering For Improved Speech Recognition.", In Proc. EUROSPEECH '95, pages 503 - 506, Madrid, 1995;

[4]P. Dalsgaard and O. Andersen.: "Identification of Monoand Poly-phonemes using acousitc-phonetic Features derived by a self-organising Neural Network.", In Proc. ICSLP '92, pages 547 - 550, Banff, 1992;

[5]A. Hauenstein and E. Marschall.: "Methods for Improved Speech Recognition Over the Telephone Lines.", In Proc. ICASSP '95, pages 425 - 428, Detroit, 1995

[6] J. L. Hieronymus.: "ASCII Phonetic Symbols for the World's Languages: Worldbet.", preprint, 1993;

[7] P. Ladefoged: "A Course in Phonetics.", Harcourt Brace Jovanovich, San Diego, 1993;

[8] P. Dalsgaard O. Andersen and W. Barry.: "Data-driven Identification of Poly- and Mono-phonemes for four European Languages.", In Proc. EUROSPEECH '93, pages 759 - 762, Berlin, 1993;

[9]A. Cole Y.K. Muthusamy and B.T. Oshika.: "The OGI Multilanguage Telephone Speech Corpus.", In Proc. ICSLP '92, pages 895 - 898, Banff, 1992;

[10] B. Wheatley, K. Kondo, W.Anderson, Y. Muthusamy: "An Evaluation Of Cross-Language Adaption For Rapid HMM Development In A New Language", In Proc. ICASSPP Adelaide,1994, pages 237 - 240;

[11] D.B. Paul, et al., "The Lincoln-Large Vocabulary Stack-Decoder HMM CSR", Bd. 2 of 5, 27/04/93, IEEE, SPEECH PROCESSING, MINNEAPOLIS, APR 27-30, 1993.

**Patentansprüche**

1. Verfahren zur Echtzeit-Anpassung eines hidden-Markov-Lautmodelles im Codebuch eines Spracherkennungssystems an eine Wortschatzänderung im verwendeten phonetischen Lexikon,

   a) bei dem zu erkennende hidden-Markov-Lautmodelle mindestens über einen ersten Mittelwertsvektor ihrer Wahrscheinlichkeitsverteilungen im Codebuch (CB) verfügbar gehalten werden,
   b) bei dem die Spracherkennung (ERKE) in üblicher Weise durch Extraktion von Merkmalsvektoren aus einem Sprachsignal (SPRA) und Zuordnung der Merkmalsvektoren zu Wahrscheinlichkeitsverteilungen von hidden-Markov-Lautmodellen aus dem Codebuch (CB) durchgeführt wird,
   c) und bei dem für mindestens eine erkannte Lautäußerung (WO) der Wortschatzänderung unmittelbar nach deren Erkennung die Lage des ersten Mittelwertsvektors mindestens eines zugehörigen hidden-Markov-Lautmodelles an die Lage des zugeordneten Merkmalsvektors über einen festgelegten Anpassungsfaktor maßstäblich angepaßt (ADAP, CB, 100) und der angepaßte Mittelwertsvektor im Codebuch (CB) als erster Mittelwertsvektor abgelegt wird.

2. Verfahren nach Anspruch 1, bei dem die Anpassung der Vektorlage durch komponentenweise Mittelwertbildung und Multiplikation mit einem konstanten Anpassungsfaktor durchgeführt wird.

3. Verfahren nach einem der vorangehenden Ansprüche, bei dem die Zuordnung der Merkmalsvektoren zu den entsprechenden hidden-Markov-Lautmodellen mit Hilfe des Viterbi-Algorithmus durchgeführt wird.

4. Verfahren nach einem der vorangehenden Ansprüche,

   a) bei dem für die Spracherkennung eine Folge von Merkmalsvektoren der Form

$$X= =\{\vec{x}_1,\vec{x}_2,....,\vec{x}_T\} \tag{1}$$

   aufgenommen wird,
   b) bei dem anzupassende und zu erkennende hidden-Markov-Lautmodelle mindestens je über einen ersten Schwerpunksvektor ihrer Laplace-Wahrscheinlichkeitsverteilungen der Form

$$b_s^i(\vec{x}) = \sum_{m=1}^{M_s^i} c_{s,m}^i e^{-\frac{\sqrt{2}}{\sigma}\|\vec{x} - \vec{\mu}_{s,m,t}^i\|} \tag{2}$$

   mit beim Training bestimmten Konstanten $M_s^i$ $c_{s,m}^i$ $\sigma$ verfügbar gehalten werden,
   c) und bei dem für mindestens eine erkannte Lautäußerung nach deren Erkennung die Lage des ersten Schwerpunktsvektors mindestens eines zugehörigen hidden-Markov-Lautmodelles an die Lage des betreffenden Merkmalsvektors über

$$\vec{\mu}_{s,m,t+1}^i =(1-\alpha)\vec{\mu}_{s,m,}^i + \alpha\vec{x}_t \tag{3}$$

   angepaßt wird mit $\vec{\mu}_{s,m,t+1}^i$ als Komponente des neuen Schwerpunktsvektors und $\alpha$ als Anpassungsfaktor.

5. Verfahren nach einem der vorangehenden Ansprüche, bei dem eine nicht erkannte Lautäußerung zurückgewiesen und keine Anpassung durchgeführt wird.

6. Verfahren nach Anspruch 3 und 4, bei dem nach der n-Besten-Suche im Viterbi-Algorithmus eine erste Trefferrate für eine erste Lauthypothese und eine zweite Trefferrate für eine zweite Lauthypothese bestimmt wird und die Zurückweisung mindestens in Abhängigkeit des Unterschiedes zwischen diesen beiden Trefferraten erfolgt.

7. Verfahren nach Anspruch 6, bei dem die Zurückweisung erfolgt, falls der Betrag der Differenz zwischen den beiden Trefferraten eine festgesetzte Schranke unterschreitet.

8. Verfahren nach einem der Ansprüche 1-7, wobei die zu erkennenden Lautmodelle Mehrsprachen-hidden-Markov-Lautmodelle sind, die durch folgendes Verfahren gebildet werden:

   a) ausgehend von mindestens einem ersten Merkmalsvektor für einen ersten Laut (L,M,R) in einer ersten Sprache (SP,EN,DE) und von mindestens einem zweiten Merkmalsvektor für einen vergleichbar gesprochenen zweiten Laut in mindestens einer zweiten Sprache (DE,SP,EN) und deren zugehörigen ersten und zweiten hidden-Markov-Lautmodellen wird ermittelt, welches der beiden hidden-Markov-Lautmodelle (L,M,R) beide Merkmalsvektoren besser beschreibt;
   b) dieses hidden-Markov-Lautmodell (L,M,R) wird für die Modellierung des Lautes in mindestens beiden Sprachen (SP,EN,DE) verwendet.

9. Verfahren nach Anspruch 8, bei dem als Maß für die Beschreibung eines Merkmalsvektors durch ein hidden-Markov-Lautmodell (L,M,R) der logarithmische Wahrscheinlichkeitsabstand als log likelihood distance zwischen jedem hidden-Markov-Lautmodell und mindestens einem Merkmalsvektor gebildet wird, wobei eine kürzerer Abstand eine bessere Beschreibung bedeutet.

10. Verfahren nach Anspruch 9, bei dem als Maß für die Beschreibung der Merkmalsvektoren durch die hidden-Markov-Lautmodelle der arithmetische Mittelwert der logarithmischen Wahrscheinlichkeitsabstände bzw. der log likelihood distances zwischen jedem hidden-Markov-Lautmodell (L,M,R) und jedem jeweiligen Merkmalsvektor gebildet wird, wobei eine kürzerer Abstand eine bessere Beschreibung bedeutet.

11. Verfahren nach Anspruch 10, bei dem das erste hidden-Markov-Lautmodell (L,M,R) von einem Phonem $\lambda_i$ und das zweite hidden-Markov-Lautmodell von einem Phonem $\lambda_j$ verwendet wird und bei dem als erste und zweite Merkmalsvektoren $X_i$ und $X_j$ verwendet werden, wobei der logarithmische Wahrscheinlichkeitsabstand zum ersten Merkmalsvektor gemäß

$$d(\lambda_i,\lambda_j) = \log p(X_i|\lambda_i) - \log p(X_i|\lambda_j) \tag{5}$$

bestimmt wird und der logarithmische Wahrscheinlichkeitsabstand zum zweiten Merkmalsvektor gemäß

$$d(\lambda_j,\lambda_i) = \log p(X_j|\lambda_j) - \log p(X_j|\lambda_i) \tag{6}$$

bestimmt wird, wobei zur Erzielung eines symmetrischen Abstandsmaßes der arithmetische Mittelwert zu

$$d(\lambda_j;\lambda_i) = \frac{1}{2}(d(\lambda_i,\lambda_j) + d(\lambda_j;\lambda_i)) \tag{7}$$

berechnet wird.

12. Verfahren nach Anspruch 11,
    bei dem dieses hidden-Markov-Lautmodell (L,M,R) für die Modellierung des Lautes in mindestens beiden Sprachen nur verwendet wird, falls $d(\lambda_j;\lambda_i)$ eine festgelegte Schrankenbedingung erfüllt.

13. Verfahren nach einem der Ansprüche 1-7, wobei die zu erkennenden Lautmodelle Merhsprachen-hidden-Markov-Lautmodelle sind, die durch folgendes Verfahren gebildet werden:

   a) ausgehend von mindestens einem ersten hidden-Markov-Lautmodell (L,M,R) für einen ersten Laut in einer ersten Sprache (SP,EN,DE) und von mindestens einem zweiten hidden-Markov-Lautmodell (L,M,R) für einen vergleichbar gesprochenen zweiten Laut in mindestens einer zweiten Sprache (DE,SP,EN), wird ein Poly-Phonem-Modell derart gebildet, daß die für die Modellierung des ersten und zweiten hidden-Markov-Lautmodelles (L, M, R) verwendeten Standardwahrscheinlichkeitsverteilungen (WD) bis zu einem festgelegten Abstandsschwellenwert, der angibt bis zu welchem maximalen Abstand zwischen zwei Standardwahrscheinlichkeitsverteilungen (WD) diese zusammengefügt werden sollen zu jeweils einer neuen Standardwahrscheinlichkeitsverteilung (WDP) zusammengefügt werden und lediglich die zusammengefügten Standardwahrscheinlichkeitsverteilungen das Poly Phonem Modell charakterisieren;
b) dieses Poly Phonem Modell wird für die Modellierung des Lautes in mindestens beiden Sprachen (DE,SP, EN) (L,M,R) verwendet.

**14.** Verfahren nach Anspruch 13,
bei dem als Abstandsschwellenwert 5 festgelegt wird.

**15.** Verfahren nach einem der vorangehenden Ansprüche,
bei dem hidden-Markov-Lautmodelle mit drei Zuständen verwendet werden, welche aus den Lautsegmenten Anlaut, Mittellaut und Ablaut gebildet werden.

**16.** Spracherkennungssystem, welches ein Verfahren nach einem der vorangehenden Ansprüche ausführt

**Claims**

**1.** Method for real-time adaptation of a hidden Markov sound model in the code book of a speech recognition system to a change in vocabulary in the phonetic lexicon being used,

a) in which hidden Markov sound models to be identified are held available in the code book (CB) at least via a first mean value vector of their probability distributions,
b) in which the speech recognition (ERKE) is carried out in the usual way by extracting feature vectors from a speech signal (SPRA) and assigning the feature vectors to probability distributions of hidden Markov sound models from the code book (CB),
c) and in which for at least one identified utterance (WO) of the change in vocabulary the position of the first mean value vector of at least one associated hidden Markov sound model is adapted true to scale immediately after identification of said utterance to the position of the assigned feature vector via a fixed adaptation factor (ADAP, CB, 100), and the adapted mean value vector is stored in the code book (CB) as first mean value vector.

**2.** Method according to Claim 1, in which the adaptation of the vector position is carried out by component-wise averaging and multiplication by a constant adaptation factor.

**3.** Method according to one of the preceding claims, in which the assignment of the feature vectors to corresponding hidden Markov sound models is carried out with the aid of the Viterbi algorithm.

**4.** Method according to one of the preceding claims,

a) in which a sequence of feature vectors of the form

$$X = \{\vec{x}_1, \vec{x}_2, ..., \vec{x}_T\} \tag{1}$$

is adopted for the speech recognition,
b) in which hidden Markov sound models to be adapted and to be identified are held available in each case at least via a first centroid vector of their Laplace probability distributions of the form

$$b_s^i(\bar{x}) = \sum_{m=1}^{M_s^i} c_{s,m}^i e^{-\frac{\sqrt{2}}{\sigma}\|\bar{x} - \bar{\mu}_{s,m,t}^i\|} \tag{2}$$

with constants $M_s^i$ $C_{s,m}^i$ $\sigma$ determined during training,
c) and in which for at least one identified utterance the position of the first centroid vector of at least one associated hidden Markov sound model is adapted after the identification of said utterance to the position of the relevant feature vector via

$$\vec{\mu}^i_{s.m.t+1}=(1-\alpha)\vec{\mu}^i_{s.m.t}+\alpha\ \vec{x}_t \tag{3}$$

with $\vec{\mu}^i_{s,m,t+1}$ as component of the new centroid vector and $\alpha$ as adaptation factor.

**5.** Method according to one of the preceding claims, in which a non-identified utterance is rejected and no adaptation is carried out.

**6.** Method according to Claim 3 and 4, in which after the nth best search in the Viterbi algorithm a first hit rate is determined for a first sound hypothesis and a second hit rate is determined for a second sound hypothesis, and the rejection is performed at least as a function of the difference between these two hit rates.

**7.** Method according to Claim 6, in which the rejection is performed if the absolute value of the difference between two hit rates undershoots a fixed bound.

**8.** Method according to one of Claims 1-7, the speech models to be identified being multi-lingual hidden Markov sound models which are formed by the following method:

a) starting from at least one first feature vector for a first sound (L, M, R) in a first language (SP, EN, DE) and from at least a second feature vector for a comparably pronounced second sound in at least one second language (DE, SP, EN) and their associated first and second hidden Markov sound models, it is determined which of the two hidden Markov sound models (L, M, R) better describes both feature vectors; and
b) this hidden Markov sound model (L, M, R) is used for modelling the sound in at least both languages (SP, EN, DE).

**9.** Method according to Claim 8, in which as a measure of the description of a feature vector by a hidden Markov sound model (L, M, R) the logarithmic likelihood distance as log likelihood distance between each hidden Markov sound model and at least one feature vector, a shorter distance signifying a better description.

**10.** Method according to Claim 9, in which as a measure of the description of the feature vectors by the hidden Markov sound models the arithmetic mean value of the logarithmic likelihood distances, or the log likelihood distances, between each hidden Markov sound model (L, M, R) and each respective feature vector is formed, a shorter distance signifying a better description.

**11.** Method according to Claim 10, in which the first hidden Markov sound model (L, M, R) of a phoneme $\lambda_i$, and the second hidden Markov sound model of a phoneme $\lambda_j$ are used, and in which $X_i$ and $X_j$ are used as first and second feature vectors, the logarithmic likelihood distance from the first feature vector being determined in accordance with

$$d(\lambda_i,\lambda_j)=\mathrm{log}p(X_i|\lambda_i)-\mathrm{log}p(X_i|\lambda_j) \tag{5}$$

and the logarithmic likelihood distance from the second feature vector being determined in accordance with

$$d(\lambda_j,\lambda_i)=\mathrm{log}p(X_j|\lambda_j)-\mathrm{log}p(X_j|\lambda_i) \tag{6}$$

the arithmetic mean value being calculated as

$$d(\lambda_j;\lambda_i)=\frac{1}{2}(d(\lambda_i,\lambda_j)+d(\lambda_j;\lambda_i)) \tag{7}$$

in order to achieve a symmetrical distance measure.

**12.** Method according to Claim 11, in which this hidden Markov sound model (L, M, R) is used to model the sound in at least both languages only if $\mathbf{d}(\lambda_j,\lambda_i)$ fulfils a fixed boundary condition.

**13.** Method according to one of Claims 1-7, the sound models to be identified being multi-lingual hidden Markov sound models which are formed by the following method:

a) starting from at least one first hidden Markov sound model (L, M, R) for a first sound in a first language (SP, EN, DE) and from at least a second hidden Markov sound model (L, M, R) for a comparably pronounced second sound in at least a second language (DE, SP, EN), a poly-phoneme model is formed in such a way that the standard probability distributions (WD) used for modelling the first and second hidden Markov sound model (L, M, R) are combined, up to a fixed distance threshold value which specifies up to which maximum distance between two standard probability distributions (WD) the latter are to be combined, to form in each case a new standard probability distribution (WDP), and only the combined standard probability distributions characterize the poly-phoneme model;
b) this poly-phoneme model is used to model the sound in at least both languages (DE, SP, EN).

**14.** Method according to Claim 13, in which 5 is fixed as the distance threshold value.

**15.** Method according to one of the preceding claims, in which use is made of hidden Markov sound models having three states which are formed from the sound segments of initial sound, middle sound and final sound.

**16.** Speech recognition system which executes a method according to one of the preceding claims.

**Revendications**

**1.** Procédé pour l'adaptation en temps réel d'un modèle de Markov caché de phonème dans le dictionnaire de codes d'un système de reconnaissance de la parole à une modification de vocabulaire dans le lexique phonétique utilisé,

a) dans lequel on tient disponibles dans le dictionnaire de codes (CB) des modèles de Markov cachés de phonèmes à reconnaître au moins par l'intermédiaire d'un premier vecteur de valeur moyenne de ses distributions de probabilités,
b) dans lequel on effectue de la manière habituelle la reconnaissance de la parole (ERKE) au moyen d'une extraction de vecteurs caractéristiques dans un signal de parole (SPRA) et d'une association des vecteurs caractéristiques à des distributions de probabilités de modèles de Markov cachés de phonèmes dans le dictionnaire de codes (CB),
c) et dans lequel, pour au moins une expression de phonème reconnue (WO) de la modification de vocabulaire, immédiatement après cette reconnaissance, on adapte à l'échelle par l'intermédiaire d'un facteur d'adaptation fixé la position du premier vecteur de valeur moyenne d'au moins un modèle de Markov caché de phonème associé à la position du vecteur caractéristique associé (ADAP, CB, 100) et on enregistre le vecteur de valeur moyenne adapté dans le dictionnaire de codes (CB) comme premier vecteur de valeur moyenne.

**2.** Procédé selon la revendication 1, dans lequel on effectue l'adaptation de la position de vecteur au moyen d'une formation de valeur moyenne sur les composantes et d'une multiplication par un facteur d'adaptation constant.

**3.** Procédé selon l'une des revendications précédentes, dans lequel on effectue l'association des vecteurs caractéristiques aux modèles de Markov cachés de phonèmes correspondants à l'aide de l'algorithme de Viterbi.

**4.** Procédé selon l'une des revendications précédentes,

a) dans lequel, pour la reconnaissance de la parole, on enregistre une suite de vecteurs caractéristiques de la forme

$$X = \{\vec{x}_1, \vec{x}_2, ..., \vec{x}_T\} \tag{1}$$

b) dans lequel on tient disponibles des modèles de Markov cachés de phonèmes à adapter et à reconnaître au moins à chaque fois par l'intermédiaire d'un premier vecteur de barycentre de leurs distributions de probabilités de Laplace de la forme

$$b_s^i(\vec{x}) = \sum_{m=1}^{M_s^i} c_{s,m}^i \, e^{-\frac{\sqrt{2}}{\sigma}\left\|\vec{x}-\vec{\mu}_{s,m,t}^i\right\|} \qquad (2)$$

avec des constantes $M_s^i$, $c_{s,m}^i$, $\sigma$ déterminées lors de l'apprentissage,

c) et dans lequel, pour au moins une expression de phonème reconnue, après cette reconnaissance, on adapte la position du premier vecteur de barycentre d'au moins un modèle de Markov caché de phonème associé à la position du vecteur caractéristique concerné par l'intermédiaire de

$$\vec{\mu}_{s,m,t+1}^i = (1-\alpha)\,\vec{\mu}_{s,m,t}^i + \alpha\vec{x}_t \qquad (3)$$

avec $\vec{\mu}_{s,m,t+1}^i$ comme composante du nouveau vecteur de barycentre et $\alpha$ comme facteur d'adaptation.

**5.** Procédé selon l'une des revendications précédentes, dans lequel on rejette une expression de phonème non reconnue et on n'effectue pas d'adaptation.

**6.** Procédé selon les revendications 3 et 4, dans lequel on détermine selon la recherche des n meilleurs dans l'algorithme de Viterbi un premier taux de succès pour une première hypothèse de phonème et un deuxième taux de succès pour une deuxième hypothèse de phonème et on effectue le rejet au moins en fonction de la différence entre ces deux taux de succès.

**7.** Procédé selon la revendication 6, dans lequel on effectue le rejet si la valeur absolue de la différence entre les deux taux de succès est inférieure à une limite fixée.

**8.** Procédé selon l'une des revendications 1 à 7, dans lequel les modèles de phonèmes à reconnaître sont des modèles de Markov cachés de phonèmes en plusieurs langues qui sont formés par le procédé suivant :

a) à partir d'au moins un premier vecteur caractéristique pour un premier phonème (L, M, R) dans une première langue (SP, EN, DE) et d'au moins un deuxième vecteur caractéristique pour un deuxième phonème prononcé de manière comparable dans au moins une deuxième langue (DE, SP, EN) et de leur premier et deuxième modèle de Markov cachés de phonèmes associés, on détermine lequel des deux modèles de Markov cachés de phonèmes (L, M, R) décrit le mieux les deux vecteurs caractéristiques ;
b) on utilise ce modèle de Markov caché de phonème (L, M, R) pour la modélisation du phonème au moins dans les deux langues (SP, EN, DE).

**9.** Procédé selon la revendication 8, dans lequel on forme comme mesure pour la description d'un vecteur caractéristique par un modèle de Markov caché de phonème (L, M, R) la distance logarithmique de probabilité ou log likelihood distance entre chaque modèle de Markov caché de phonème et au moins un vecteur caractéristique, une distance plus courte correspondant alors à une meilleure description.

**10.** Procédé selon la revendication 9, dans lequel on forme comme mesure pour la description des vecteurs caractéristiques par les modèles de Markov cachés de phonèmes la valeur moyenne arithmétique des distances logarithmiques de probabilités ou log likelihood distances entre chaque modèle de Markov caché de phonème (L, M, R) et chaque vecteur caractéristique respectif, une distance plus courte correspondant alors à une meilleure description.

**11.** Procédé selon la revendication 10, dans lequel on utilise le premier modèle de Markov caché de phonème (L, M, R) d'un phonème $\lambda_i$ et le deuxième modèle de Markov caché de phonème d'un phonème $\lambda_j$ et dans lequel on utilise comme premier et deuxième vecteur caractéristique $X_i$ et $X_j$, la distance logarithmique de probabilité au premier vecteur caractéristique étant déterminée selon

$$d(\lambda_i,\ \lambda_j) = \log p(X_i|\lambda_i) - \log p(X_i|\lambda_j) \qquad (5)$$

et la distance logarithmique de probabilité au deuxième vecteur caractéristique étant déterminée selon

$$d(\lambda_j, \lambda_i) = \log p(X_j|\lambda_j) - \log p(X_j|\lambda_i) \tag{6}$$

la valeur moyenne arithmétique

$$d(\lambda_j;\lambda_i) = \frac{1}{2}(d(\lambda_i,\lambda_j)+d(\lambda_j;\lambda_i)) \tag{7}$$

étant calculée pour obtenir une mesure de distance symétrique.

**12.** Procédé selon la revendication 11,
dans lequel on utilise ce modèle de Markov caché de phonème (L, M, R) pour la modélisation du phonème au moins dans les deux langues seulement si $d(\lambda_j ; \lambda_i)$ vérifie une condition limite fixée.

**13.** Procédé selon l'une des revendications 1 à 7, dans lequel les modèles de phonèmes à reconnaître sont des modèles de Markov cachés de phonèmes en plusieurs langues qui sont formés par le procédé suivant :

a) à partir d'au moins un premier modèle de Markov caché de phonème (L, M, R) pour un premier phonème dans une première langue (SP, EN, DE) et d'au moins un deuxième modèle de Markov caché de phonème (L, M, R) pour un deuxième phonème prononcé de manière comparable dans au moins une deuxième langue (DE, SP, EN), on forme un modèle de poly-phonème de telle sorte que les distributions de probabilités standards (WD) utilisées pour la modélisation du premier et du deuxième modèle de Markov caché de phonème (L, M, R) jusqu'à une valeur de seuil de distance fixée, qui indique jusqu'à quelle distance maximale entre deux distributions de probabilités standards (WD) celles-ci doivent être réunies, sont réunies à chaque fois en une nouvelle distribution de probabilité standard (WDP) et seules les distributions de probabilités standards réunies caractérisent le modèle de poly-phonème ;
b) on utilise ce modèle de poly-phonème pour la modélisation du phonème au moins dans les deux langues (DE, SP, EN) (L, M, R).

**14.** Procédé selon la revendication 13,
dans lequel on fixe 5 comme valeur de seuil de distance.

**15.** Procédé selon l'une des revendications précédentes,
dans lequel on utilise des modèles de Markov cachés de phonèmes avec trois états qui sont formés à partir des segments de phonème début de phonème, milieu de phonème et fin de phonème.

**16.** Système de reconnaissance de la parole qui met en oeuvre un procédé selon l'une des revendications précédentes.

## FIG 1

FIG 2